Europäisches Patentamt

European Patent Office

Office européen des brevets

(11) Veröffentlichungsnummer: **0 407 643 A1**

# (12) EUROPÄISCHE PATENTANMELDUNG

(21) Anmeldenummer: 89112908.2

(22) Anmeldetag: 14.07.89

(51) Int. Cl.⁵: **B65G 67/60**

(43) Veröffentlichungstag der Anmeldung:
**16.01.91 Patentblatt 91/03**

(84) Benannte Vertragsstaaten:
**AT BE CH DE ES FR GB GR IT LI LU NL SE**

(71) Anmelder: **COPLA FÖRDER-UND LAGERTECHNIK GESELLSCHAFT FÜR ANLAGENBAU mbH**
**Dachsteinweg 6a**
**D-1000 Berlin 42(DE)**

(72) Erfinder: **Eckel, Wilfried,Dipl.- Ing.**
**Dachsteinweg 8**
**D-1000 Berlin 42(DE)**
Erfinder: **Schröder, Niels**
**Neue Strasse 12**
**D-2080 Pinneberg(DE)**

(74) Vertreter: **Richter, Werdermann & Gerbauletlet**
**Neuer Wall 10**
**D-2000 Hamburg 36(DE)**

(54) **Vorrichtung zum Be- und Entladen, insbesondere von Schiffen mit Stückgut und/oder mit beladenen Paletten.**

(57) Die Schiffbe- und Entladevorrichtung besteht aus einem kaiseitigen Portal (20) mit einem in waagerechter Richtung ausfahrbaren Auslegerarm 30 und einem am Portal feststehend angeordneten Traggestell, wobei in dem Auslegerarm (30) unter Ausbildung eines Zwischenraumes (35) zwei übereinanderliegende Transportebenen (31,32) ausgebildet sind, von denen die untere Transportebene (31) zum Transport von beladenen Paletten und die obere Transportebene (32) zum Transport von Stückgut, wie z.B. Kartons od.dgl., dient. Das portalseitig angeordnete, feststehende Traggestell ist mit einer oberen Transportbahn (41) und einer unteren verfahrbaren Transportbahn (100) versehen, wobei die obere Transportbahn (41) mit der oberen Transportebene (32) und die verfahrbare Transportbahn (100) mit der unteren Transportebene (31) des Auslegerarmes (30) zusammenarbeitet, der an seinem freien Ende einen Senkrechtförderer (50) trägt, der für den Palettentransport mit einem Paletten-Vertikalförderer (300) versehen ist, der aus dem senkrechten Transportbereich verfahrbar ist. Außerdem ist neben dem Paletten-Vertikalförderer (300) ein Stückgut-Vertikalförderer (200) angeordnet, der bei Außerbetriebnahme in den Auslegerarm (30) einfahrbar und bei Betriebnahme als Stückgut-Vertikalförderer einsetzbar ist.

EP 0 407 643 A1

Fig. 1

## VORRICHTUNG ZUM BE- UND ENTLADEN, INSBESONDERE VON SCHIFFEN MIT STÜCKGUT UND/ODER MIT BELADENEN PALETTEN

Die Erfindung betrifft eine Vorrichtung zum Be- und entladen, insbesondere von Schiffen mit Stückgut, wie Kartons od.dgl.,und/oder mit beladenen Paletten, bestehend aus einem Portal mit einer horizontalen Brückenplatteform und mit einem mindestens eine Transportgutzuführ-oder -ableitbahn aufweisenden waagerechten ein- und ausfahrbaren Auslegerarm, der an seinem freien Ende einen in seiner Länge veränderbaren Senkrechtförderer trägt,der mit der Transportzuführ- oder -ableitbahn zusammenarbeitet,und der an seinem unteren Ende eine Transportgutaufnahme- oder -abgabeeinrichtung trägt.

Durch die DE-A-1 290 875 ist eine Vorrichtung zum Be-und Entladen, insbesondere von Schiffen, mit Stück-und/oder Schüttgut, bestehend aus einem Portal und einem einen Förderer aufweisenden, höhenverschwenkbaren Auslegerarm, der an seinem freien Ende ein senkrechtes Trägergestell mit einem wendelförmigen, als Überleitrollen geführtes, endloses Förderband ausgebildetes Förderorgan trägt, dessen oberes freies Ende im Abgabebereich der Abgabeseite des in dem verschwenkbaren Auslegerarm gelagerten Förderers angeordnet ist, dem auf der Brückenplattform vorgesehene Zuführbänder vorgeschaltet sind, bekannt, wobei oberhalb des in dem Trägergestell gehaltenen wendelförmigen Förderers ein zweiter wendelförmiger Förderer in einem innerhalb des Trägergestells geführten und um seine Längsachse drehbaren Haltegestell angeordnet ist, das an seiner Außenwandung mit schraubengewindeförmigen Profilierungen versehen ist, die mit an der Innenwandung des Trägergestells ausgebildeten Gegenprofilen in Eingriff stehen, die und die Profilierungen der Steigung der Wendel der Förderer entsprechend ausgebildet sind, von denen der obere Förderer eine seiner oberen Umlenktrommel vorgeschaltete Überleitwalze aufweist, die in Förderrichtung umlaufend angetrieben und im Haltegestell für den Förderer gelagert ist.

Des weiteren ist durch die DE-A-26 22 399 ein Senkrechtförderer zum Be- und Entladen, insbesondere von Schiffen mit Stückgütern,mit einer senkrechten Transportbahn, die am bodenseitigen Ende mit einer Transportgutaufnahme- oder -abgabeeinrichtung und am oberen Ende mit einem feststehenden Transportgutzuführ- oder -ableitband in Verbindung steht, und die in einem Traggestell angeordnet ist, das mit seinem oberen Ende an einem feststehenden Traggerüst gehalten und in diesem um eine senkrechte Achse drehbar ist, und mit einer mittige Durchbrechung zum Hindurchführen der senkrechten Transportbahn und einen Abstreifer aufweisenden Drehteller zum Überleiten des Transportgutes von der senkrechten Transportbahn auf das Transportgutzuführband oder umgekehrt, bekannt, wobei in dem Traggestell oberhalb des Drehtellers im Abgabe- oder Zuführbereich der senkrechten Transportbahn ein Gurtförderband angeordnet ist, das an seinem der senkrechten Transportbahn abgekehrten Ende mit einem plattenförmigen, um eine senkrechte Mittelachse verschwenkbaren Abstreifer versehen ist, und daß zu beiden Seiten seines der senkrechten Transportbahn abgekehrten Endes sich zum Drehteller hin erstreckende Überleitbahnen aufweist, und wobei im Bereich des feststehenden Transportgutzuführ- oder -ableitbandes ein weiterer Abstreifer oberhalb des Drehtellers um eine senkrechte Mittelachse verschwenkbar ist.

Beide bekannten Schiffsbe- und -entladeanlagen haben gemeinsam ein fahrbares Portal mit einer horizontalen Brückenplattform und einen einseitig heb- und senkbaren Auslegerarm, der an dem Portal angelenkt ist und der an seinem freien Ende einen Senkrechtförderer trägt, wobei die Gesamtanordnung dabei so getroffen ist, daß der Senkrechtförderer bei jeder Schwenkstellung des Auslegerarmes eine lotrechte Stellung einnimmt. Dieser Senkrechtförderer arbeitet mit einem Transportgutzuführ-oder -ableitband zusammen, welches an dem höhenverschwenkbaren Auslegerarm angeordnet ist, so daß auf dem Transportgutzuführ- oder -ableitband ankommendes Transportgut an den Senkrechtförderer abgegeben oder von dem Senkrechtförderer an das Transportgutzuführ- oder -ableitband abgegeben wird, wenn Transportgut entladen wird. Das in dem Auslegerarm angeordnete und mit dem Senkrechtförderer zusammenarbeitende Transportgutzuführ- oder -ableitband erstreckt sich dabei über die gesamte Länge des Auslegerarmes. Portalseitig sind für die Zuführung oder die Ableitung von Transportgut dem Transportgutzuführ- oder -ableitband weitere Transportbänder zugeordnet. Ist darüber hinaus der Auslegerarm mit dem Transportgutzuführ- oder -ableitband an dem Portal der Be- und Entladevorrichtung längsverfahrbar ausgebildet, dann ist für die Überbrückung des Zwischenraumes zwischen dem Transportgutzuführ- oder -ableitband und dem diesem zugeordneten Zuführband ein weiteres Transportband angeordnet, welches jedoch nicht in der Transportebene des Transprotgutzuführ- oder -ableitbandes und des diesem vorgeschalteten Zuführbandes liegt, sondern gegenüber der Ebene des Transportgutzuführ- oder -ableitbandes und seines Zuführbandes in einer tiefer gelegenen Ebene angeordnet ist, wobei dann an den diesem Transportband zugekehrten Umlaufbereichen des Transportgutzuführ- oder -ableitbandes und des ihm zugeordneten Zuführbandes Überleitrollen vorgesehen sind, damit das Transportgut die durch die versetzte Anordnung der Transportbänder gegebenen Höhenunterschiede überwinden kann. Derartige Be- und Entladeeinrichtungen sind jedoch ausschließlich geeignet für den Transport von Säcken und von Stückgütern, jedoch nicht für beladene Paletten, da, um ein Verschieben der Palettenladung zu vermeiden, beladene Paletten nur immer in einer waagerechten oder senkrechten Ebene transportiert werden können.

Um auch beladene Paletten bei einer Vorrichtung zum Be- und Entladen von Schiffen auf einer Transportbahn transportieren zu können, ohne daß ein Verschieben der Palettenladung erfolgt, ist nach der EP-A-0 298 147 eine Vorrichtung zum Be- und Entladen, insbesondere von Schiffen mit Stückgut, insbesondere von beladenen Paletten bekannt. Diese Schiffsbe- und -entladevorrichtung besteht aus einem kaiseitigen Portal mit einem höhenverschwenkbaren Auslegerarm, der von einem Tragarm mit einem Traggestell und einem in diesem geführten, in waagerechter Richtung verfahrbaren Traggestell gebildet wird, das an seinem freien Ende einen in seiner Höhe verfahrbaren Senkrechtförderer mit einer als Hubbühne ausgebildeten Transporteinrichtung trägt, die mit einer in dem Auslegerarm angeordneten Transportgutzuführ- oder -ableitbahn zusammenarbeitet, das aus einer in dem Traggestell angeordneten ersten Transportbahn, einer in dem Traggestell angeordneten zweiten Transportbahn und einer zwischen diesen beiden Transportbahnen angeordneten dritten Transportbahn besteht, die in dem zwischen der ersten Transportbahn und der zweiten Transportbahn durch Ausziehen des Traggestells aus dem feststehenden Traggestell ausgebildeten Zwischenraum verfahrbar ist, so daß beladene Paletten auf einer Transportbahn mit stufenlosen Übergängen transportiert werden können.Ein wahlweises Transportieren von Kartons und beladenen Paletten ist mit dieser Vorrichtung nicht möglich.

Die Erfindung löst die Aufgabe, eine portalartige Vorrichtung mit einem waagerechten ein- und ausfahrbaren Auslegerarm und einem an diesem vorgesehenen Senkrechtförderer zu schaffen, mit der das Be- und Entladen von Schiffen mit Stückgütern, wie z. B. Kartons, und der Transport des Stückgutes in einer waagerechten Transportebene mit stufenlosen Übergängen in jeder Ausfahrstellung des Auslegerarmes bei gleichzeitiger Anpassung der Transportbahn an die Länge des jeweils durch das Ein-und Ausfahren des Auslegerarmes gegebenen Verschiebeweges gewährleistet ist, ohne daß bei dem Transport die einzelnen Stückgüter auf der Transportbahn verschoben werden, und bei der die Vorrichtung für den senkrechten Transport bei Außerbetriebnahme in den Auslegerarm einziehbar ist. Eine weitere Aufgabe der Erfindung ist es darüber hinaus, neben einer Be- und Entladung von Stückgütern auch beladene Paletten be-und entladen zu können, wobei ein wahlweises Be- und Entladen von Stückgut und/oder beladenen Paletten und ein wechselweises Ein- und Ausfahren der Vorrichtungen für den senkrechten Transport der Stückgüter und/oder der beladenen Paletten in die senkrechte Transportbahn möglich sein soll, ohne daß sich die Palettenladungen verschieben.

Diese Aufgabe wird bei einer Vorrichtung zum Be- und Entladen von Schiffen mit Stückgut, wie Kartons od. dgl., durch die im Patentanspruch 1 gekennzeichneten Merkmale gelöst.

Bei einer derart erfindungsgemäß ausgebildeten Be- und Entladevorrichtung ist an dem Portal ein in waagerechter Richtung ein- und ausfahrbarer Auslegerarm angeordnet, der an seinem freien, kaiseitig abgewandten Ende einen Senkrechtförderer trägt für den senkrechten Transport von Stückgut, wie Kartons od.dgl., der als Stückgut-Vertikalförderer ausgebildet ist und der bei Außerbetriebnahme in das den Auslegerarm bildende Traggestell einziehbar ist. In der Betriebsstellung wird dieser Stückgut-Vertikalförderer, und zwar in eingezogener Stellung, in den Innenraum des Gehäuses des Senkrechtförderers verfahren und dann bis an das untere Ende des Senkrechtförderers derart verfahren, daß die vom Stückgut-Vertikalförderer ausgebildete senkrechte Förderstrecke im Innenraum des Gehäuses des Senkrechtförderers zu liegen kommt, wohingegen die untere waagerechte Förderstrecke des Stückgut-Vertikalförderers am unteren Ende des Gehäuses des Senkrechtförderers angeordnet ist und in diesem Bereich mit der Transportgutaufnahme-oder -abgabeeinrichtung zusammenarbeitet, die am unteren Ende des Senkrechtförderers vorgesehen ist. Der hier eingesetzte Stückgut-Vertikalförderer ist in an sich bekannter Weise ausgebildet. Dadurch, daß ein Teil der Zugmittel des Stückgut-Vertikalförderers über eine in dem ersten Traggestell gelagerte, waagerecht verschiebliche Umlenkrolle geführt ist, besteht die Möglichkeit, die Länge der waagerechten Förderstrecke des Stückgut-Vertikalförderers der jeweiligen Ausfahrlänge des Senkrechtförderers anpassen zu können. Dadurch, daß der Stückgut-Vertikalförderer in der Außerbetriebstellung in das den Auslegerarm bildende ein- und ausfahrbare Traggestell einziehbar ist, ist die Möglichkeit gegeben, den Senkrechtförderer für den Transport von Schüttgut verwenden zu können.

Des weiteren wird die Aufgabe bei einer Vorrichtung zum wechselweisen Be- und Entladen von Schiffen mit Stückgut und/oder von beladenen Paletten durch die im Patentanspruch 2 gekennzeichneten Merkmale gelöst.

Eine derart erfindungsgemäß ausgebildete Be- und Entladevorrichtung ermöglicht das wechselweise Be- und Entladen von Schiffen mit Stückgut oder mit beladenen Paletten. Für das Be- und Entladen von beladenen Paletten ist in dem Gehäuse des Senkrechtförderers der Vorrichtung ein Paletten-Vertikalförderer angeordnet, der aus einer im Innenraum des Gehäuses des Senkrechtförderers verfahrbaren Hubbühne besteht, die aufgrund ihrer Verfahrbarkeit allen Ausfahrlängen des Senkrechtförderers anpaßbar ist. Hinzu kommt, daß für den Außerbetriebszustand dieser Paletten-Vertikalförderer aus der senkrechten Transportbahn im Innenraum des Gehäuses des Senkrechtförderers ausfahrbar ist, um den in dem Auslegerarm angeordneten Stückgut-Vertikalförderer in den Innenraum des Gehäuses des Senkrechtförderers überführen zu können. In der Außerbetriebsstellung des Stückgut-Vertikalförderers ist dieser in den Auslegerarm eingefahren, so daß dann der Innenraum des Gehäuses des Senkrechtförderers für den Paletten-Vertikalförderer zur Verfügung steht.

Für den Übergabetransport des Stückgutes oder der beladenen Paletten weist das den Auslegerarm bildende ein-und ausfahrbare Traggestell zwei übereinanderliegende Transportebenen auf, von denen die untere Transportebene für den Transport beladener Paletten ausgebildet ist, wohingegen die obere Transportebene zum Transport des Stückgutes dient. Die untere Transportebene wird dabei von einer Anzahl hintereinanderliegend angeordneter Transportbänder gebildet, wohingegen die obere Transportebene ein Transportband aufweist. Hinzu kommt, daß das Portal der Vorrichtung ein feststehendes Traggestell aufweist, welches beim Verschieben des verfahrbaren Traggestells mit den beiden Transportebenen und dem Senkrechtförderer zwischen die beiden Transportebenen einfährt . Dieses feststehende Traggestell ist mit Transportbahnen versehen, um die beladenen Paletten der unteren Transportebene des verfahrbaren Traggestells kaiseitig angeordneten Ableit- oder Zuführtransportebenen zuführen zu können; auch die obere Transportebene steht in Wirkverbindung mit einer auf dem feststehenden Traggestell angeordneten Transportbahn, die wiederum mit kaiseitigen Ableit- oder Zuführtransportebenen in Verbindung steht, so daß sowohl Stückgut als auch beladene Paletten den kaiseitig vorgesehenen Ableit- oder Zuführtransportebenen zugeführt oder von diesen aufgenommen werden können. Die Transportbahnen des feststehenden Traggestells für die beladenen Paletten und für das Stückgut sind dabei so ausgebildet, daß unabhängig von der Einfahrlänge des feststehenden Traggestells zwischen die beiden Transportebenen ein einwandfreier Transport des Stückgutes und der beladenen Paletten gewährleistet ist, wobei die sich an die untere Transportebene anschließende Transportbahn des feststehenden Traggestells des Portals der Vorrichtung dabei so ausgebildet ist, daß die beladenen Paletten mit stufenlosen Übergängen transportiert werden können, was vermittels eines in waagerechter Richtung an dem feststehenden Traggestell verfahren Transportbandes erfolgt.

Vorteilhafte Ausgestaltungen der Erfindung sind in den Unteransprüchen gekennzeichnet.

Im folgenden wird der Gegenstand der Erfindung in den Zeichnungen erläutert. Es zeigt

Fig. 1 in einer Seitenansicht eine Schiffsbe- und -entladevorrichtung aus einem mit einem Senkrechtförderer für einen senkrechten Transport von beladenen Paletten und mit einem Auslegerarm mit zwei übereinanderliegend angeordneten Transportebenen für Stückgut und für beladene Paletten, wobei in dem Auslegerarm ein in die senkrechte Transportstellung überführbarer Stückgut-Verteikalförderer angeordnet ist,

Fig 2 in einer vergrößerten Seitenansicht das Portal der Vorrichtung,

Fig. 3 in einer vergrößerten Seitenansicht den Auslegerarm mit den beiden Transportebenen und den Senkrechtförderer,

Fig. 4 in einer vergrößerten Seitenansicht und teilweise in einem senkrechten Schnitt den als Senkrechtförderer aus dem Auslegerarm der Vorrichtung ausgefahrenen Stückgut-Vertikalförderer,

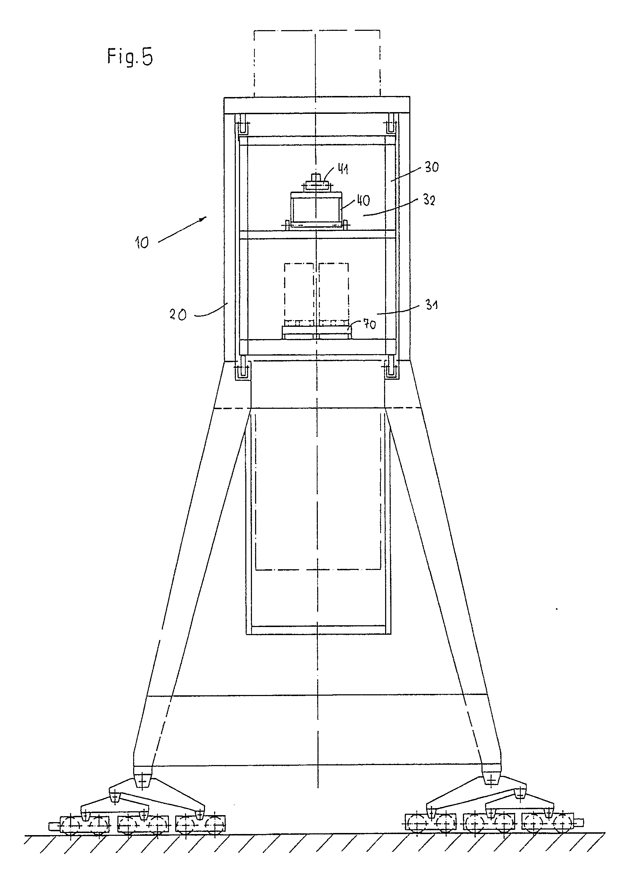

Fig. 5 einen vergrößerten senkrechten Schnitt gemäß Linie V-V in Fig. 1,

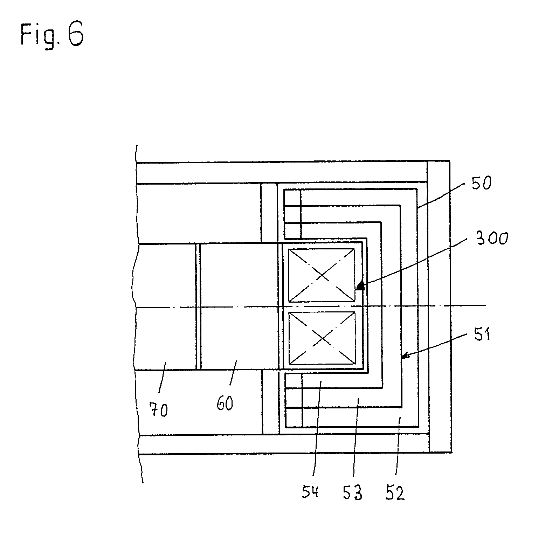

Fig. 6 einen vergrößerten waagerechten Schnitt gemäß Linie VI-VI in Fig. 3, und

Fig. 7 in einer schematischen Seitenansicht den Stückgut-Vertikalförderer.

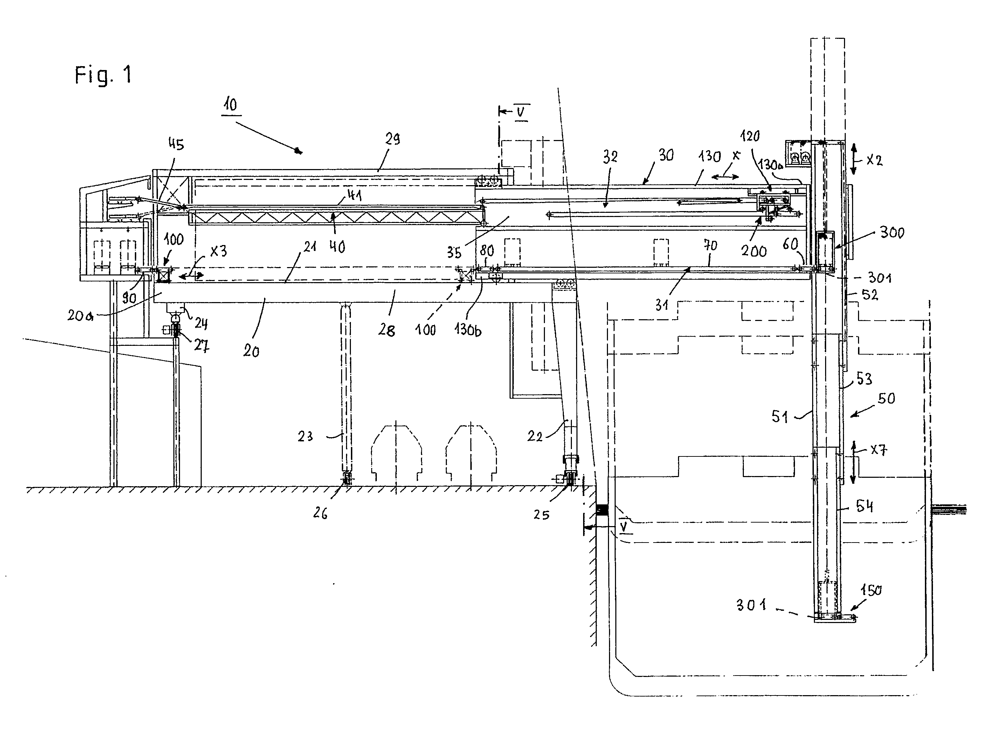

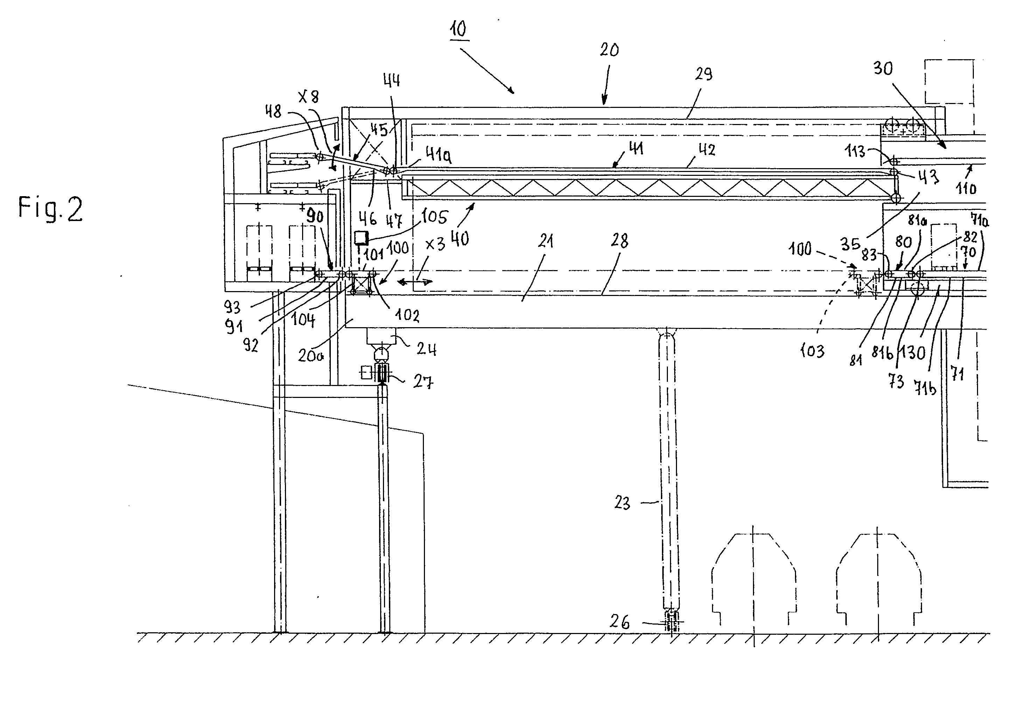

Die in Fig.1,2 und 3 dargestellte Schiffsbe- und -entladevorrichtung 10 besteht aus einem verfahrbaren Portal 20 mit einer horizontalen Brückenplattform 21, dessen kaiseitiges Ende mit 20a bezeichnet ist. Die Portalbeine 22,23,24 tragen an den Enden Laufrollen 25,26,27, so daß das Portal 20 kaiseitig verfahrbar ist. Des weiteren ist das Portal mit einer waagerechten unteren Führung 28 auf der horizontalen Brückenplattform 21 und mit einer darüberliegenden waagerechten oberen Führung 29 versehen,zwischen denen ein Auslegerarm 30 verfahrbar angeordnet ist.

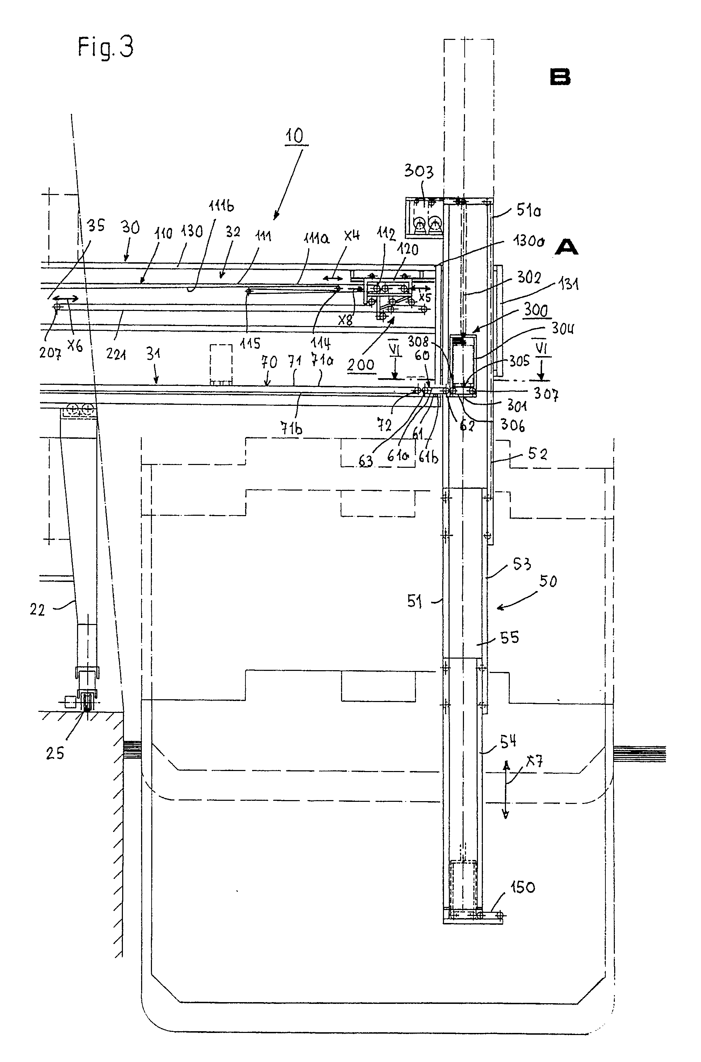

Das Portal weist einen in waagerechter Richtung ein-und ausfahrbaren Auslegerarm 30 auf, dessen Verfahrbarkeit in Pfeilrichtung X vermittels in der Zeichnung nicht dargestellter Antriebsmittel erfolgt. Dieser Auslegerarm 30 wird von einem ersten Traggestell 130 gebildet, dessen vorderes Ende 130a einen Senkrechtförderer 50 trägt, der aus einem rohrförmigen Gehäuse 51 besteht, welches aus mehreren, in Pfeilrichtung X7 ein- und ausziehbaren Gehäuseabschnitten 52,53,54 besteht. Der Innenraum 55 des Gehäuses 51 des Senkrechtförderers 50 dient zur wechselweisen Aufnahme eines nachstehend noch näher beschriebenen Stückgut-Vertikalförderers 200 und eines nachstehend noch näher beschriebenen Paletten-Vertikalförderers 300. Das Ende 130a des Traggestells 130 ist mit einer Führung 131 versehen, die zur Halterung des Gehäuses 51 des Senkrechtförderers 50 dient, wobei die Halterung des Gehäuses 51 des Senkrechtförderers 50 in dieser Führung 131 derart ist, daß der Senkrechtförderer 50 in Pfeilrichtung X2 in senkrechter Richtung vermittels in der Zeichnung nicht dargestellter Antriebsmittel verfahrbar ist, so daß das Gehäuse 51 des Senkrechtförderers 50 von der Stellung A in die Stellung B verfahrbar ist (Fig 3).

An seinem unteren Ende trägt das Gehäuse 51 des Senkrechtförderers 50 eine Transportgutaufnahme- oder -abgabeeinrichtung 150, die aus einer Anzahl von Transportbahnen gebildet wird, die u.a. auch ein- und ausziehbar ausgebildet sind, um eine Längenveränderung der Transportgutaufnahme- oder -abgabeeinrichtung 150 zu ermöglichen. Die Transportgutaufnahme-oder -abgabeeinrichtung 150 kann aus Rollenbahnen, deren Rollen umlaufend angetrieben sind, oder aus Transportbändern bestehen. In Abhängigkeit von dem jeweils zu transportierenden Gut ist die Transportgutaufnahme- oder -abgabeeinrichtung 150 an dem Gehäuse 51 des Senkrechtförderers 50 austauschbar angeordnet, so daß jeweils in Abhängigkeit von dem Transportgut die geeignete Transportgutaufnahme-oder -abgabeeinrichtung eingesetzt werden kann.Des weiteren ist das Gehäuse 51 des Senkrechtförderers 50 im Bereich des Traggestells 130 mit zwei übereinanderliegend angeordneten Überleitdurchbrechungen 56,57 versehen, worauf nachstehend noch näher eingegangen wird. Der Abschnitt, mit dem das Gehäuse 51 des Senkrechtförderers 50 über das Traggestell 130 hinaus verfahrbar ist, ist mit 51a bezeichnet (Fig.3).

In dem Traggestell 130 der Vorrichtung 10 sind zwei übereinanderliegend angeordnete Transportebenen 31,32 ausgebildet, von denen die untere Transportebene 31 unter Ausbildung eines Zwischenraumes 35 unterhalb der oberen Transportebene 32 angeordnet ist.

Das verfahrbare Portal 20 umfaßt ferner ein zweites Traggestell 40, welches feststehend an dem Portal 20 angeordnet ist. Dieses feststehende Traggestell 40 ist dem verfahrbaren Traggestell 130 vorgeschaltet. Auf seiner Oberseite trägt das Traggestell 40 eine sich über die gesamte Länge des Traggestells 40 erstreckende Transportbahn 41, die aus einem umlaufend angetriebenen Transportband 42 besteht, welches über Umlenkrollen 43,44 geführt ist, von denen eine Umlenkrolle angetrieben ist.

Dieser Transportbahn 41 ist am kaiseitigen Ende 41a eine weitere Transportbahn 45 vor- bzw. nachgeschaltet, die aus einem umlaufend angetriebenen Transportband 46 besteht, das über zwei Umlenkrollen 47,48 geführt ist, von denen eine Umlenkrolle angetrieben ist. Im Bereich der Umlenkrolle 47 ist das Transportband 46 dieser Transportbahn 45 einseitig gelagert, so daß die Transportbahn 45 in Pfeilrichtungtz X8 höhenverschwenkbar ist. Diese Transportbahn 45 arbeitet mit kaiseitigen Ableit- oder Zuführtransportebenen zusammen.

Die Anordnung des feststehenden Traggestells 40 des Portals 20 ist derart, daß bei einem Verfahren des Traggestells 130 das Traggestell 40 mit einem Abschnitt oder gänzlich in den Zwischenraum 35 zwischen den beiden Transportebenen 31,32 einfahrbar ist, so daß bei einem Verfahren des Traggestells 130 in Richtung zum Kai das Traggestell 40 zwischen den beiden Transportebenen 31,32 angeordnet ist.

Die untere Transportebene 31 in dem Traggestell 130 wird von drei Transportbahnen 60,70,80 gebildet. Alle drei Transportbahnen 60,70,80 sind hintereinanderliegend angeordnet. Die erste, dem Senkrechtförderer 50 zugekehrte Transportbahn 60 besteht aus einem umlaufend angetriebenen Transportband 61 mit einem oberen Trum 61a und mit einem unteren Trum 61b. Das Transportband 61 ist über zwei in dem Traggestell 130 gelagerte Umlenkrollen geführt, von denen eine Umlenkrolle angetrieben ist.

Der Transportbahn 60 ist in Richtung zum kaiseitigen Ende die zweite Transportbahn 70 vorgeschaltet. Diese Transportbahn 70 besteht aus einem umlaufend angetriebenen Transportband 71 mit einem oberen Trum 71a und einem unteren Trum 71b. Das Transportband 71 ist über zwei, in dem Traggestell 130 gelagerte Umlenkrollen 72,73 geführt, von denen eine Umlenkrolle angetrieben ist.

Der Transportbahn 70 ist die dritte Transportbahn 80 vorgeschaltet. Auch diese Transportbahn 80 besteht aus einem umlaufend angetriebenen Transportband 81 mit einem oberen Trum 81a und einem unteren Trum 81b. Das Transportband 81 ist über Umlenkrollen 82,83 geführt, die in dem Traggestell 130 gelagert sind und von denen eine Umlenkrolle angetrieben ist.

Die Transportbahn 70 weist eine Länge auf, die einem Vielfachen der Länge der Transportbahn 60 bzw. der Transportbahn 80 entspricht. Vorteilhafterweise weisen die Transportbahnen 60,80 eine Länge auf, die mindestens der Länge einer Palette entspricht. Alle drei Transportbahnen 60,70,80 sind hintereinanderliegend in dem Traggestell 130 angeordnet und weisen eine der Gesamtlänge des Traggestells 130 entsprechende Länge auf.

Auf der horizontalen Brückenplattform 21 des Portals 20 ist zwischen der Transportbahn 80 der unteren Transportebene 31 und einer auf dem Portal 20 an dessen kaiseitigem Ende 20a angeordneten, feststehenden Übergabetransportbahn 90 eine verfahrbare Transportbahn 100 mit mindestens einer der Länge oder der Breite einer Palette entsprechenden Länge angeordnet. Diese Übergabetransportbahn 90 besteht aus einem umlaufend angetriebenen Transportband 91 mit einem oberen Trum 91a und einem unteren Trum 91b. Dieses Transportbahn 91 ist über Umlenkrollen 92,93 geführt, von denen eine Umlenkrolle angetrieben ist. Diese Übergabetransportbahn 90 steht mit kaiseitigen Ableit- oder Zuführ-Transportebenen bzw. Transportbahnen in Verbindung.

Die Transportbahn 100 ist auf dem Portal 20 in Pfeilrichtung X3 verfahrbar. Hierzu ist die Transportbahn 100 auf einem Wagen 104 angeordnet, der mittels einer Antriebseinrichtung 105 in Pfeilrichtung X3 auf der horizontalen Brückenplattform 21 des Portals 20 verfahrbar ist, wozu auf der Brückenplatteform 21 Führungsschienen od. dgl. angeordnet sind. Diese verfahrbare Transportbahn 100 besteht aus einem auf dem Wagen 104 angeordnete, umlaufend angetriebenen Transportband 101 mit einem oberen Trum 101a und einem unteren Trum 101b. Das Transportband 101 ist über Umlenkrollen 102,103 geführt, von denen eine Umlenkrolle angetrieben ist.

Die Gesamtanordnung der vier Transportbahnen 60,70,80,100 ist derart, daß ihre oberen Trume 61a,71a,81a,101a in einer waagerechten Ebene liegend sind. Die Transportbahn 100 ist zwischen der Übergabetransportbahn 90 und der Transportbahn 80 , und zwar jeweils in dem Bereich verfahrbar, der sich aus dem jeweiligen Abstand des Traggestells 130 bzw. der unteren Transportebene 31 in Abhängigkeit von der Länge des Ausfahrbereiches des ein- und ausfahrbaren Traggestells 130 von der feststehenden Übergabetransportbahn 90 ergibt, wobei die Verfahrgeschwindigkeit der verfahrbaren Transportbahn 100 von der Länge des Abstandes zwischen dem Traggestell 130 bzw. der unteren Transportebene 31 und der feststehenden Übergabetransportbahn 90 und der Anzahl der zugeführten Paletten vermittels eines Steuerwerkes abhängig und steuerbar ist. In diesem, in der Zeichnung nicht dargestellten Steuerwerk sind auch alle Antriebseinrichtungen , die die Vorrichtung 10 aufweist, zusammengeführt, so daß über dieses Steuerwerk die einzelnen Transportabläufe in den jeweils erforderlichen Richtungen steuerbar sind (Fig.1,2 und 3).

Die obere Transportebene 32 in dem Traggestell 130 wird gebildet von einer waagerechten, in ihrer Länge veränderbaren Transportbahn 110 und aus einem Stückgutvertikalförderer 200, worauf nachstehend noch näher eingegangen wird (Fig.1 und 3).

Die Transportbahn 110 besteht aus einem umlaufend angetriebenen Transportband 111 mit einem oberen Trum 111a und einem unteren Trum 111b. Das Transportband 111 ist über zwei Umlenkrollen 112,113 geführt, von denen eine Umlenkrolle angetrieben ist. Die Umlenkrolle 112 des Transportbandes 111 ist in einem waagerecht verfahrbaren Tragrahmen 120 gelagert, der in dem Traggestell 130 in Pfeilrichtung X5 in waagerechter Richtung mittels einer in der Zeichnung nicht dargestellten Antriebseinrichtung verfahrbar ist. Die andere Umlenkrolle 113 des Transportbandes 111 ist in dem Traggestell 130 gelagert. Der jeweils ausgebildete untere Trum 111b des Transportbandes 111 weist gegenüber dem oberen Trum 111a zwischen den beiden Umlenkrollen 112,113 eine vielfache Länge auf. Um die Länge des Transportbandes 111 bzw. die Länge des oberen Trums 111a zwischen den beiden Umlenkrollen 112,113 der jeweiligen Bestriebsstellung des Stückgut-Vertikalförderers 200 anpassen zu können, ist der untere Trum 111b des Transportbandes 111 über zwei im Abstand voneinander angeordnete Umlenkrollen 114,115 geführt, von denen die Umlenkrolle 115 feststehend in dem Traggestell 130 gelagert ist, während die Umlenkrolle 114 in waagerechter Richtung verschieblich in dem Traggestell 130 gelagert und gehalten ist, so daß diese Umlenkrolle 114 in Pfeilrichtung X4 verschieblich ist. Wird der Tragrahmen 120 in dem Traggestell 130 in Richtung zu dem Senkrechtförderer 50 verfahren, dann muß die Länge des oberen Trums 111a des Transportbandes 111 vergrößert werden, denn durch das Verfahren des Tragrahmens 120 in Richtung zu dem Senkrechtförderer 50 wird die Umlenkrolle 112 des Transportbandes 111 zusammen mit dem Tragrahmen 120 in Pfeilrichtung X8 bewegt, wobei gleichzeitig die Umlenkrolle 114 in Richtung zum kaiseitig gelegenen Ende des Traggestells 130 bewegt wird. Es besteht jedoch auch die Möglichkeit, für die Erzielung einer Längenveränderung des oberen Trums 111a des Transportbandes 111 die beiden Umlenkrollen 114,115 in waagerechter Richtung verschieblich in dem Traggestell 130 zu lagern.

Um eine Überleitung des Transportgutes von den Transportebenen 31,32 zu dem Senkrechtförderer 50 zu gewährleisten, weist das Gehäuse 51 des Senkrechtförderers 50 die beiden übereinanderliegend angeordneten Überleitdurchbrechungen 56,57 auf, wobei die Überleitdurchbrechung 56 im Bereich der unteren Transportebene 31 und die Überleitdurchbrechung 57 im Bereich der oberen Transportebene 32 vorgesehen ist.

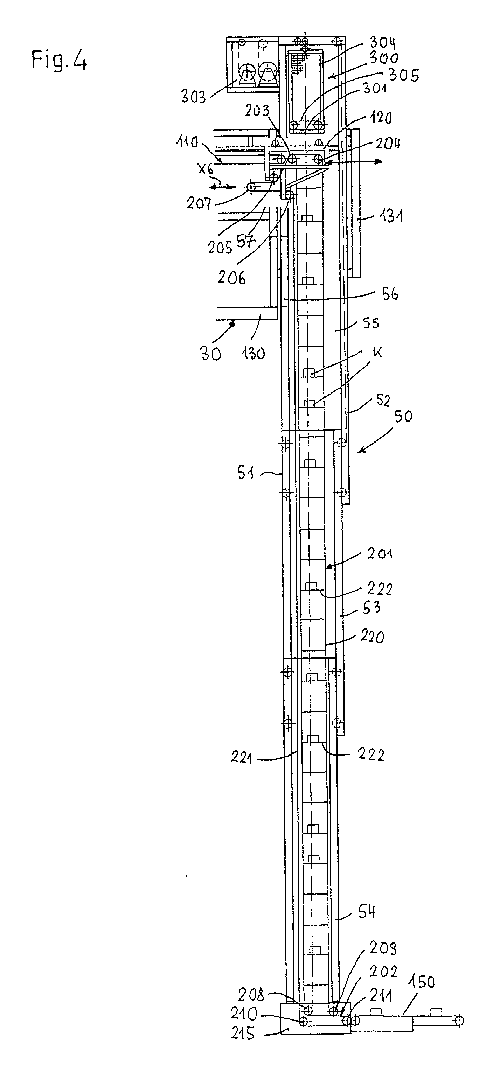

Die obere Transportebene 32 umfaßt neben der Transportbahn 110 auch noch den Stückgut-Vertikalförderer 200, der in dem verfahrbaren Tragrahmen 120 angeordnet und gehalten ist. Im Außerbetriebszustand nimmt der Stückgut-Vertikalförderer 200 die in Fig. 1 und 3 dargestellte Stellung ein. Dagegen bei Betriebnahme ist der Stückgut-Vertikalförderer 200, wie in Fig. 4 dargestellt, in den Innenraumbereich des Gehäuses 51 des Senkrechtförderers 50 verfahren und in dem Innenraum 55 des Gehäuses 51 des Senkrechtförderers 50 angeordnet. Im Betriebszustand ist die Anordnung des Stückgut-Vertikalförderers 200 derart, daß senkrecht in dem Gehäuse 51 des Senkrechtförderers 50 transportiertes Stückgut, wie Kartons od.dgl. K, im oberen Bereich des Senkrechtförderers 50 mit der Transportbahn 110 der oberen Transportebene 32 derart zusammenwirkt, daß das Transportgut einwandfrei von dem Stückgut-Vertikalförderer 200 auf die Transportbahn 110 übergeben wird.

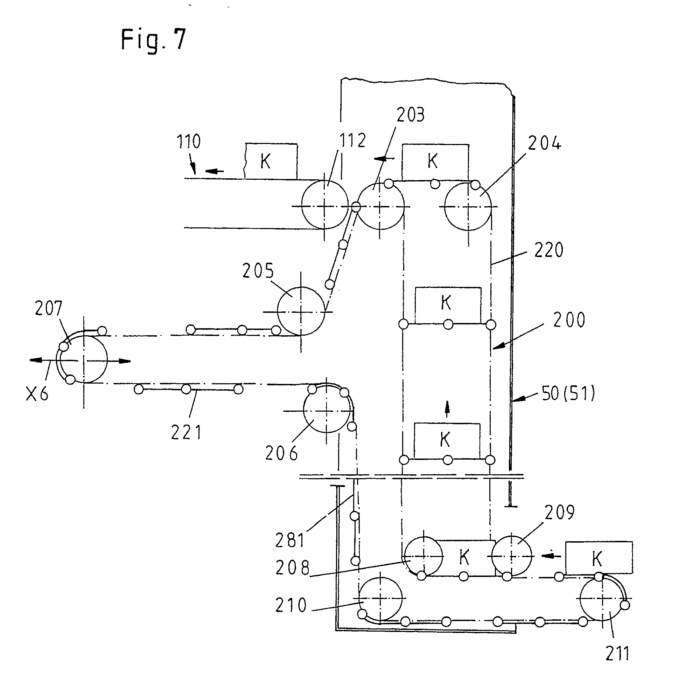

Der Stückgut-Vertikalförderer 200 ist in an sich bekannter Weise ausgebildet. Eingesetzt wird z.B. ein Vertikalförderer , wie dieser unter VDI 3583 in den VDI-Richtlinien, Januar 1976, beschrieben und dargestellt ist. Jedoch auch andersartig ausgebildete Stetigförderer bzw. Umlauf-S-Förderer können hier eingesetzt werden. Wesentlich ist, daß diese Vertikalförderer im Betriebszustand eine senkrechte Förderstrecke 201 und eine untere waagerechte Förderstrecke 202 aufweisen. Ein derartiger Stückgut-Vertikalförderer 200 , wie dieser in Fig.7 dargestellt ist, findet z.B. in der Vorrichtung 10 als Förderer für Stückgut Verwendung. Dieser Stückgut-Vertikalförderer 200 besteht aus über Umlenkrollen geführten Zugmitteln 220,221, die z.B. als Ketten ausgebildet sind. Die Umlenkrollen sind mit 203,204,205,206 und mit 208,209, 210,211 bezeichnet. Zwischen zweimal zwei endlosen, paarweise parallel in der Tiefe versetzt angeordneten Zugmitteln, von denen mit 220,221 die sichtbar dargestellten Zugmittel bezeichnet sind, sind Tragorgane, wie z.B. Transportplattformen 222 eingehängt. Dabei sind die vier endlosen Zugmittel zweimal als Innenketten und zweimal als Außenketten angeordnet. Die Transportplattformen 222 sind in ihren vier Anschlußpunkten drehbar gelagert. Die Förderrichtung verläuft von der Waagerechten in die Senkrechte und wieder quasi in die Waagerechte über. Als Transportplattformen 222 finden Tragplatten, Stäbe oder Transportgut Verwendung. Im Transportzustand nehmen die Transportplattformen 222 eine waagerechte Stellung ein und dienen zur Aufnahme des Transportgutes, wie Kartons od.dgl. K. Beim Rücklauf der Zugmittel, was in Fig. 7 beim Zugmittel 221 angedeutet ist, liegen die Transportplattformen 222 an dem Zugmittel an und werden im Bereich der unteren waagerechten Förderstrecke 202 in die Transportguttragposition überführt.

Bei dem in Fig. 3 und 4 dargestellten Ausführungsbeispiel sind in dem verfahrbaren Tragrahmen 120 die beiden oberen Umlenkrollen 203,204 in einem Abstand und in einer waagerechten Ebene gelagert. Des weiteren ist das Zugmittel über zwei weitere Umlenkrollen 205,206 derart geführt, daß ein Zugmittelvorrat geschaffen wird. Die beiden Umlenkrollen 205,206 sind ebenfalls in dem Tragrahmen 120 gelagert. Zur Ausbildung einer Vorratsschleife für das Zugmittel 221 ist das Zugmittel über eine weitere Umlenkrolle 207 geführt, die in dem Traggestell 130 derart verschieblich gelagert ist, daß die Umlenkrolle 207 in Pfeilrichtung X1 verschoben werden kann.

Nimmt der Stückgut-Vertikalförderer 200 die in Fig. 1 und 3 gezeigte Außerbetriebsstellung innerhalb des Traggestells 130 ein, dann nimmt die Umlenkrolle 207 eine kaiseitig zugewandte Stellung ein, so daß über den geschaffenen Abstand zwischen der Umlenkrolle 207 und den weiteren, in dem Tragrahmen 120 gelagerten Umlenkrollen 203,204,205,206 des Stückgut-Vertikalförderers 200 die Zugmittel 220,221 aufgenommen und untergebracht werden können.

Wird dagegen der Stückgut-Vertikalförderer 200 in seine Betriebsstellung durch Verfahren des Tragrahmens 120 in den Innenraumbereich des Gehäuses 51 des Senkrechtförderers 50 bewegt und in dem Innenraum 51,wie in Fig 4 dargestellt,angeordnet, dann nimmt die Umlenkrolle 207 eine dem Ende 130a des Traggestells 130 zugekehrte Stellung ein, da in Abhängigkeit von der Länge des Senkrechtförderers 50 bzw der Länge des Ge häuses 51 des Senkrechtförderers 50 eine entsprechende Länge der Zugmittel 220,221 zur Verfügung stehen muß, wobei die jeweils erforderlichen Zugmittellängen durch die Verfahrbarkeit der Umlenkrolle 207 erreicht wird.

Der Stückgut-Vertikalförderer 200 weist ferner noch ein unteres Rahmengestell 215 auf, in dem vier Umlenkrollen 208,209,210,211 angeordnet sind, und zwar derart, daß eine kurze waagerechte Förderstrecke 202 ausgebildet ist, die zur Aufnahme des Transportgutes dient, wenn dieses von oben nach unten in den Senkrechtförderer 60 transportiert werden soll. Die Breitenabmessungen des Stückgut-Vertikalförderers 200 sind so gehalten, daß im Betriebszustand des Stückgut-Vertikalförderer seine senkrechte Förderstrecke 201 in dem Innenraum 55 des Gehäuses 51 des Senkrechtförderers und die waagerechte Förderstrecke 202 im unteren Bereich des Senkrechtförderers 50 ausgebildet werden kann.

Nimmt der Stückgut-Vertikalförderer 200 seine Außerbetriebsstellung in dem Traggestell 130 ein und soll aus dieser Außerbetriebsstellung der Stückgut-Vertikalförderer in seine Betriebsstellung in dem Innenraum 55 des Gehäuses 51 des Senkrechtförderers 50 übergeführt werden, dann wird das Gehäuse 51 des Senkrechtförderers 50 über das Traggestell 130 so weit nach oben verfahren und außerdem die einzelnen teleskopierbaren Gehäuseabschnitte 52,53,54 so weit eingefahren, daß das untere Rahmengestell 215 des Stückgut-Vertikalförderers 200 über eine in der Zeichnung nicht dargestelltte, lösbare Verbindung mit dem unteren Ende des Gehäuses 51 des Senkrechtförderers 50 verbunden werden kann, so daß dann beim Ausfahren der einzelnen Gehäuseabschnitte 52,53,54 des Gehäuses 51 und bei einem Absenken des Gehäuses 51 des Senkrechtförderers 50 dann die senkrechte Förder strecke 201 des Stückgut-Vertikalförderers 200 in dem Innenraum 55 des Gehäuses 51 des Senkrechtförderers 50 ausgebildet ist (Fig.4). Die Überleitung des Stückgut-Vertikalförderers 200 von der Außerbetriebsstellung in dem Traggestell 130 in die Betriebsstellung erfolgt durch die Überleitdurchbrechung 57 in der Wand des Gehäuses 51 des Senkrechtförderers 50.

Der in der Vorrichtung 10 angeordnete Paletten-Vertikalförderer 300 besteht aus einer senkrecht, vermittels eines Seilzuges 302 und einer Antriebsvorrichtung 303 in dem Innenraum 55 des Gehäuses 51 des Senkrechtförderers 50 verfahrbaren Palettenhubbühne 301 mit einem käfigartigen Palettenaufnahmegestell 304. Diese Palettenhubbühne 301 weist eine als Transportbahn 305 ausgebildete Palettenstandfläche auf,die aus einem umlaufend angetriebenen Transportband 306 besteht, das über Umlenkrollen 307,308 geführt ist, von denen eine Umlenkrolle angetrieben ist. Mittels des Seilzuges 302 ist die Palettenhubbühne 301 zur Palettenübergabe in den Bereich der unteren Transportebene 31 in dem Traggestell 130 derart verfahrbar, daß von der Transportbahn 305 der Palettenhubbühne 301 stehende beladene Paletten auf die untere Transportebene 31 übergeben und weitertransportiert werde. Die Abmessungen der Palettenhubbühne 301 und der auf dieser angeordneten Transportbahn 305 sind derart, daß mindestens eine beladene Palette abgestellt werden kann. Vorzugsweise weist die Palettenhubbühne 301 und die mit ihr verbundene Transportbahn 305 Abmessungen auf, die der Standfläche von zwei nebeneinanderstehend angeordneten Paletten entspricht. Der Innenraum 55 des Gehäuses 51 des Senkrechtförderers 50 weist dann entsprechende Querschnittsabmessungen auf, die wiederum ausreichen, um den Stückgut-Vertikal förderer 200 in dem Innenraum 55 des Gehäuses 51 des Senkrechtförderers 50 anordnen zu können.

Sollen mit der Vorrichtung 10 beladene Paletten transportiert werden, so erfolgt der senkrechte Palettentransport mittels des Paletten-Vertikalförderers 300, wobei dann , wenn die Palettenhubbühne 301 im Bereich der unteren Transportebene 31 des Traggestells 130 zu liegen kommt, eine Übergabe der Paletten auf diese untere Transportebene 31 zur Weiterleitung an kaiseitig vorgesehene Ableit- oder Zuführtransportbahnen. Der senkrechte Transport der beladenen Paletten erfolgt dann durch senkrechtes verfahren der Palettenhubbühne 301 in dem Innenraum 55 des Gehäuses 51 des Senkrechtsförderers 50.

Soll dagegen Stückgut , wie z.B. Kartons K, transportiert werden, so wird der Paletten-Vertikalförderer 300 aus seiner Betriebsstellung in dem Innenraum 55 des Gehäuses 51 des Senkrechtförderers heraus und in den oberen Bereich des Gehäuses 51 verfahren, und zwar so weit, daß die Palettenhubbühne 301 des Palette-Vertikalförderers 300 oberhalb der Überleitdurchbrechung 57 im Bereich der oberen Transportebene 32 in dem Traggestell 130 zu stehen kommt (Fig 4). Die miteinander teleskopierbaren Gehäuseabschnitte 52,53,54 des Gehäuses 51 des Senkrechtsförderers 50 werden dann ineinandergefahren und der gesamte Senkrechtförderer 50 wird in der Führung 131 des Traggestells 130 nach oben verfahren. Hieraufhin wird dann der Tragrahmen 120 mit dem Stückgut-Vertikalförderer 200 in seiner Außerbetriebsstellung durch die Überleitdurchbrechung 57 in dem Gehäuse 51 des Senkrechtförderers 50 in dessen Innenraum 55 verfahren und nach einem Auseinanderverfahren der Gehäuseabschnitte 52,53,54 wird die senkrechte Förderstrecke 201 des Stückgut-Vertikalförderers 200 gebildet, was durch Kupplung des Rahmenge stells 215 des Stückgut-Vertikalförderers 200 mit dem unteren Ende des Gehäuses 51 des Senkrechtförderers 50 ermöglicht wird. Nimmt der Stückgut-Vertikalförderer 200 die in Fig. 4 gezeigte Stellung ein, dann ist das Stückgut in senkrechter Richtung nach oben oder nach unten transportierbar und wird im oberen Bereich an die obere Transportebene 32 abgegeben oder von dieser übergeben, und zwar jeweils in Abhängigkeit von der jeweiligen Transportrichtung. Diese Transportebene 32 steht unter Zwischenschaltung der Transportbahn 110 ebenfalls mit kaiseitigen Ableit- oder Zuführbahnen in Verbindung. Sollen wiederum beladene Paletten gefördert werden, dann wird der Stückgut-Vertikalförderer 200 eingefahren , und zwar so weit, bis dieser die in Fig. 1 und 3 gezeigte Außerbetriebsstellung in dem Traggestell 130 einnimmt. Der Palettentransport kann dann mittels der verfahrbaren Palettenhubbühne 301 des Paletten-Vertikalförderers erfolgen.

Mit einer derart ausgebildeten und vorangehend beschriebenen Vorrichtung 10 ist ein wahlweises Be- und Entladen von Schiffen mit beladenen Paletten und mit Stückgütern, wie Kartons od.dgl. möglich.

Soll dagegen mit der Vorrichtung 10 nur ein Be- und Entladen , insbesondere von Schiffen mit Stückgut, wie Kartons od.dgl. erfolgen, so ist die Vorrichtung 10 entsprechend ausgebildet. Der Auslegerarm 30 besteht aus einem auf der horizontalen Brückenplattform 21 des Portals 20 waagerecht verfahrbaren Traggestell 130 mit einer Transportebene 32 für das Stückgut und einem dem Traggestell 130 vorgeschalteten zweiten, feststehend angeordneten Traggestell 40, das auf seiner Oberseite eine sich über die gesamte Länge des Traggestells 40 erstreckende Transportbahn 41 trägt, wobei das Traggestell 130 in das Traggestell 40 derart einfahrbar ist, daß das Traggestell 40 in Abhängigkeit von der Einfahrtiefe gänzlich oder mit einem Abschnitt unterhalb des Traggestells 130 fahrend und unter diesem liegend ist, wobei das Traggestell 130 an seinem dem Traggestell 40 abgekehrten Ende 130a den Senkrechtförderer 50 trägt. Auch in diesem Falle besteht der Senkrechtförderer 50 aus einem rohrförmigen Gehäuse 51 mit mehreren ein- und austeleskopierbaren Gehäuseabschnitten 52,53,54 und mit einem in dem Gehäuseinnenraum 55 anordbaren Stückgut-Vertikalförderer 200 für den senkrechten Transport von Stückgut. Der senkrechte Vertikalförderer 200 ist , wie vorangehend beschrieben, in an sich bekannter Weise ausgebildet.

Die Transportebene 32 des Traggestells 130 besteht aus einer waagerechten, in ihrer Länge veränderbaren Transportbahn 110, die mit der Transportbahn 41 des feststehenden Traggestells 40 zusammenarbeitet. Des weiteren umfaßt die Transportebene 32 neben der Transportbahn 110 den Stückgut-Vertikalförderer 200, der in Anpassung an die Ausfahrlänge des Gehäuses 51 des Senkrechtförderers 50 längenveränderbar ist. Bei Außerbetriebstellung ist der Stückgut-Vertikalförderer 200 in dem Traggestell 130 liegend und in Betriebstellung für den senkrechten Transport für das Stückgut in dem Innenraum des Gehäuses 51 des Senkrechtförderers 50 der Vorrichtung 10 liegend. Zur Überleitung des Transportgutes weist das Gehäuses 51 des Senkrechtförderers 50 im Bereich der Transportebene 32 des Traggestells 130 eine Überleitdurchbrechung 57 auf.

Der in dem Traggestell eine waagerechte Außerbetriebs stellung einnehmende Stückgut-Vertikalförderer 200 ist in den Innenraum 55 des Gehäuses 51 des Senkrechtförderers 50 unter Ausbildung einer senkrechten Förderstrecke 201 bis in den Bereich der Transportgutaustrags-oder -aufnahmevorrichtung 150 verfahrbar, die am unteren Ende des Gehäuses 51 des Senkrechtförderers 50 angeordnet ist.

Die Vorrichtung für das Be- und Entladen von Schiffen mit Stückgut, wie Kartons od.dgl., unter Verwendung eines Stückgut-Vertikalförderers 200 weist alle bei der Vorrichtung 10 mit dem Stückgut-Vertikalförderer 200 und dem Paletten-Vertikalförderer 300 beschriebenen Bauteile auf bis auf den Paletten-Vertikalförderer 300, der im Falle der ausschließlichen Verwendung eines Stückgut-Vertikalförderers entfällt.

Soweit Antriebsvorrichtungen vorgesehen sind, so sind diese in einem Steuerwerk zusammengeführt, über das die einzelnen Arbeitsabläufe, die Umlaufrichtungen, das Verfahren der verfahrbaren Transportbahn 100 und die Betätigung des Stückgut-Vertikalförderers 200 und des Paletten-Vertikalförderers 300 für das Verfahren in die Außerbetriebsstellungen oder in die Betriebsstellungen steuerbar sind. Die Transssportbahnen 60 und 80 stellen Wartepositionen für die anlaufenden , beladenen Paletten dar, um ein kontinuierliches Überleiten der Paletten zu erreichen.

## Ansprüche

Vorrichtung zum Be- und Entladen,insbesondere von Schiffen, mit Stückgut, wie Kartons od.dgl., bestehend aus einem Portal (20) mit einer horizontalen Brückenplattform (21) und mit einem mindestens eine Transportgutzuführ- oder -ableitbahn aufweisenden waagerechten ein- und ausfahrbaren Auslegerarm (30), der an seinem freien Ende einen in seiner Länge veränderbaren Senkrechtförderer (50), der mit der Transportzuführ- oder -ableitbahn zusammenarbeitet,und der an seinem unteren Ende eine Transportgutaufnahme- oder - abgabeeinrichtung (150) trägt, dadurch gekennzeichnet, daß der Auslegerarm (30) aus einem auf der horizontalen Brückenplattform (21) des Portals (20) waagerecht verfahrbaren ersten Traggestell (130) mit einer Transportebene (32) für Stückgut und einem dem ersten Traggestell (130) vorgeschalteten zweiten, feststehend angeordneten Traggestell (40) besteht, das auf seiner Oberseite eine sich über die gesamte Länge des zweiten Traggestells (40) erstreckende Transportbahn (41) trägt, wobei das erste Traggestell (130) in das zweite Traggestell (40) derart einfahrbar ist, daß das zweite Traggestell (40) in Abhängigkeit von der Einfahrtiefe gänzlich oder mit einem Abschnitt unterhalb des ersten Traggestells (130) fahrend und unter diesem liegend ist und an seinem dem zweiten Traggestell (40) abgekehrten Ende (130a) den Senkrechtförderer (50) aus einem rohrförmigen Gehäuse (51) mit mehreren ein- und austeleskopierbaren Gehäuseabschnitten (52,53,54) und mit einem in dem Gehäuseinnenraum (55) anordbaren Vertikalförderer (200) für den senkrechten Transportvon Stückgut trägt, daß die Transportebene (32) des ersten Traggestells (130) aus einer waagerechten, in ihrer Länge veränderbaren Transportbahn (110), die mit der Transportbahn (41) des feststehenden zweiten Traggestells (40) zusammenarbeitet, und die aus einem in Anpassung an die Ausfahrlänge des Gehäuses (51) des Senkrechtförderers (50) längenveränderbaren Stückgut-Vertikalförderer (200) besteht, der in Außerbetriebsstellung in dem ersten Traggestell (130) liegend und der in Betriebsstellung zum senkrechten Transport für das Stückgut ausgebildet ist, daß das Gehäuse (51) des Senkrechtförderers (50) der Vorrichtung (10) im Bereich der Transportebenbe (32) des ersten Traggestells (130) mit einer Überleitdurchbrechung (57) versehen ist, und daß der in dem ersten Traggestell (130) eine waagerechte Außerbetriebsstellung einnehmende Stückgut-Vertikalförderer (50) bis an dessen Transportgutaustragsoder -aufnahmeende (150) verfahrbar ist.

2. Vorrichtung zum wahlweisen Be- und Entladen,insbesondere von Schiffen, mit beladenen Paletten und mit Stückgut,wie Kartons od.dgl.,bestehend aus einem Portal (20) mit einer horizontalen Brückenplattform (21) und mit einem mindestens eine Transportgutzuführ- oder -ableitbahn aufweisenden waagerechten ein- und ausfahrbaren Auslegerarm (30), der an seinem freien Ende einen in seiner Länge veränderbaren Senkrechtförderer (50), der mit der Transportzuführ- oder -ableitbahn zusammenarbeitet,und der an seinem unteren Ende eine Transportgutaufnahme-oder -abgabeeinrichtung (150) trägt, dadurch gekennzeichnet, daß der Auslegerarm (30) aus einem auf der horizontalen Brückenplattform (21) des Portals (20) waagerecht verfahrbaren ersten Traggestell (130) mit einer unteren Transportebene (31) für Paletten und mit einer über der unteren Transportebene (31) unter Ausbildung eines Zwischenraumes (35) angeordneten oberen Transportebene (32) für Stückgut und einem dem ersten Traggestell (130) vorgeschalteten zweiten, feststehend angeordneten Traggestell (40) besteht, das auf seiner Oberseite eine sich über die gesamte Länge des zweiten Traggestells (40) erstreckende Transportbahn (41) trägt, wobei das erste Traggestell (130) in das zweite Traggestell (40) derart einfahrbar ist, daß das zweite Traggestell (40) in Abhängigkeit von der Einfahrtiefe gänzlich oder mit einem Abschnitt in den Zwischenraum (35) zwischen den beiden Transportebenen (31,32) des ersten Traggestells (130) einfahrend und zwischen diesen liegend ist, und an seinem dem zweiten Traggestell 40) abgekehrten Ende (130a) den Senkrechtförderer (50) aus einem rohrförmigen Gehäuse (51) mit mehreren ein- und austeleskopierbaren Gehäuseabschnitten (52,53,54) und mit in dem Gehäuseinnenraum (55) wechselweise anordbaren Förderern (200,300) für den senkrechten Transport von Stückgut oder beladenen Paletten trägt, daß die untere Transportebene (31) des ersten Traggestells (130) aus einem dem Senkrechtförderer (50) zugekehrten ersten Transportbahn (60), einer zweiten Transportbahn (70), deren Länge einem Vielfachen der Länge der ersten Transportbahn (60) entspricht, und einer dritten Transportbahn (80) besteht, deren Länge der Länge der ersten Transportbahn (60) entspricht, wobei alle drei Transportbahnen (60,70,80) hintereinanderliegend in dem ersten Traggestell (130) angeordnet sind und eine der Gesamtlänge des ersten Traggestells (130) entsprechende Länge aufweisen, daß auf der horizontalen Brückenplattform (21) des Portals (20) zwischen der dritten Transportbahn (80) der unteren Transportebene (31) und einer auf dem Portal (20) an dessen kaiseitigem Ende (20a) angeordneten, feststehenden Übergabetransportbahn (90) eine verfahrbare Transportbahn (100) mit mindestens einer der Länge oder der Breite einer Palette entsprechenden Länge angeordnet ist, die auf einem mittels einer Antriebseinrichtung (105) waagerecht verfahrbaren Wagen (104) angeordnet ist, wobei die oberen Trume (61a,71a,81a,101a) der vier Transportbahnen (60,70, 80,100) in einer Ebene liegend sind und wobei die zwischen der Übergabetransportbahn (90) und der dritten Transportbahn (80) angeordnete verfahrbare Transportbahn (100) zwischen den beiden Transportbahnen (80,90) jeweils in dem Bereich verfahrbar ist, der sich aus dem jeweiligen Abstand des ersten Traggestells (130) bzw. der unteren Transportebene (31) in Abhängigkeit von der Länge des Ausfahrbereichs des ein- und ausfahrbaren ersten Traggestells (130) von der feststehenden Übergabetransportbahn (90) ergibt, wobei die Verfahrgeschwindigkeit der verfahrbaren Transportbahn (100) von der Länge des Abstandes zwischen dem ersten Traggestell (130) bzw. der unteren Transportebene (31) und der feststehenden Übergabetransportbahn (90) und der Anzahl der zugeführten Paletten vermittels eines Steuerwerkes abhängig und steuerbar ist, daß die obere Transportebene (32) des ersten Traggestells (130) aus einer waagerechten, in ihrer Länge veränderbaren Transportbahn (110), die mit der Transportbahn (41) des feststehenden zweiten Traggestells (40) zusammenarbeitet, und die aus einem in Anpassung an die Ausfahrlänge des Gehäuses (51) des Senkrechtförderers (50) längenveränderbaren Stückgut-Vertikalförderer (200) besteht, der in Außerbetriebsstellung in dem ersten Traggestell (130) liegend und der in Betriebsstellung zum senkrechten Transport für das Stückgut ausgebildet ist, daß das Gehäuse (51) des Senkrechtförderers (50) der Vorrichtung (10) mit einem Abschnitt (51a) über das erste Traggestell (130) hinaus verlängert ist und das im Bereich der unteren Transportebene (31) und im Bereich der oberen Transportebene (32) des ersten Traggestells (130) mit je einer Überleitdurchbrechung (56,57) versehen ist, wobei in dem Innenraum (55) des Gehäuses (51) des Senkrechtförderers (50) ein Paletten-Vertikalförderer (300) aus einer senkrecht, vermittels eines Seilzuges (302) und einer Antriegsvorrichtung (303) verfahrbaren Palettenhubbühne (301) mit einem käfigartigen Palettenaufnahmegestell (304) und mit einer als Transportbahn (305) ausgebildeten Palettenstandfläche angeordnet ist, die zur Palettenübergabe in den Bereich der unteren Transportebene (31) und bei Stückgutförderung in einem oberhalb der oberen Transportebene (32) liegenden Bereich verfahrbar ist, und daß in Außerbetriebsstellung der Palettenhubbühne (301) oberhalb der oberen Transportebene (32) des ersten Traggestells (130) der in diesem eine waagerechte Außerbetriebsstellung einnehmende Stückgut-Vertikalförderer (200) in den Innenraum (55) des Gehäuses (51) des Senkrechtförderers (50) bis an dessen Transportgutaustrags-oder -aufnahmeende (150) verfahrbar ist.

3. Vorrichtung nach einem der Ansprüche 1 und 2, dadurch gekennzeichnet, daß zur Aufnahme und Halterung sowie zum Verfahren des Stückgut-Vertikalförderers (200) in den Bereich des Innenraumes (55) des Gehäuses (51) des Senkrechtförderers (50) in dem ersten Traggestell (130) ein waagerecht verfahrbarer Tragrahmen (120) angeordnet ist, daß der Stückgut-Vertikalförderer (200) im Betriebszustand mit einer senkrechten (201) und einer unteren waagerechten (202) Förderstrecke ausgebildet ist, wobei die oberen Umlenkrollen (203,204) für die Zugmittel, wie Ketten od.dgl. (220,221) , mit für den Stückgut-Transport waagerecht liegenden und bei Zugmittelrücklauf parallel an den Zugmitteln (220,221) anliegenden Transportplattformen (222) des Stückgut-Vertikalförderers (200) in dem Tragrahmen (120) gelagert sind, so daß der obere Übergabebereich des Stückgut-Vertikalförderers (200) im Bereich der waagerechten Transportbahn (110) der Transportebene (32) des ersten Traggestells (130) liegend ist, daß zweite weitere Umlenkrollen (205,206) für die Zugmittel (220,221) in dem Tragrahmen (120) gelagert sind, daß im Außerbetriebszustand die Zugmittel (220,221) des Stückgut-Vertikalförderers (200) über eine in dem ersten Traggestell (130) gelagerte, waagerecht verschiebliche Umlenkrolle (207) geführt sind, und daß der Innendurchmesser des Gehäuses (51) des Senkrechtförderers (50) etwa der Länge der unteren waagerechten Förderstrecke (202) des Stückgut-Vertikalförderers (200) entspricht, wobei die Zugmittel (220,221) im Bereich der unteren waagerechten Förderstrecke (202) über vier Umlenkrollen (208,209,210,211) geführt sind, die in einem in dem Innenraum (55) des Gehäuses (51) des Senkrechtförderers (50) vermittels Antriebsvorrichtungen absenkbaren Rahmengestell (215) gelagert sind.

4. Vorrichtung nach einem der vorange gangenen Ansprüche 1 bis 3, dadurch gekennzeichnet, daß die waagerechte, in ihrer Länge veränderbare Transportbahn (110) der Transportebene (32) des ersten Traggestells (130) bei in das erste Traggestell (130) eingefahrenem Stückgut-Vertikalförderer (200) eine Länge aufweist, die gegenüber der Länge des ersten Traggestells (130) eine geringere Länge aufweist und die aus einem endlosen Transportband (111) besteht, das mit seinem der Transportbahn (41) des zweiten, feststehenden Traggestells (40) zugekehrten Ende über eine feststehend gelagerte Umlenkrolle (113) und mit seinem dem eingefahrenen Stückgut-Vertikalförderer (200) zugekehrten Ende über eine in dem Tragrahmen (120) für den Stückgut-Vertikalförderer (200) gelagerte Umlenkrolle (112) geführt ist, wobei der untere Trum (111b) des Transportbandes (111) eine mehrfache Länge des oberen Trums (111a) zwischen den Umlenkrollen (112,113) des Transportbandes (111) aufweist, und daß das Transportband (111) mit seinem unteren Trum (111b) unter Ausbildung einer Vorratsschleife über zwei, in einem Abstand voneinander und geringfügig zueinander versetzten Umlenkrollen (114,115) geführt ist, von denen die eine Umlenkrolle (115) fest in dem ersten Traggestell (130) und die andere Umlenkrolle (114) in dem ersten Traggestell (130) in Transportbandlängsrichtung oder beide Umlenkrollen (114,115) in dem ersten Traggestell (130) verschieblich gelagert sind.

5. Vorrichtung nach einem der Ansprüche 2 bis 4, dadurch gekennzeichnet, daß die erste Transportbahn (60) und die dritte Transportbahn (80) der unteren Transportebene (31) des ersten Traggestells (130) Längen aufweisen, die mindestens der Länge oder der Breite einer Palette entsprechen.

6. Vorrichtung nach einem der Ansprüche 2 bis 5, dadurch gekennzeichnet, daß die Palettenhubbühne (301) mit dem käfigartigen Palettenaufnahmegestell (304) des Paletten-Vertikalförderers (300) zur Aufnahme von mindestens zwei nebeneinanderstehenden Paletten ausgebildet ist, wobei die als Palettenstandfläche ausgebildete Transportbahn (305) eine der Hubbühnenfläche entsprechend groß bemessene Fläche aufweist.

Fig. 1

Fig.2

**Fig. 3**

Fig.4

Fig.5

Fig. 6

Fig. 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 281 181 (WEIMAR)<br>* Spalten 4-8; Figur 1 *<br>--- | 1-6 | B 65 G 67/60 |
| A | EP-A-0 320 068 (FIGEE)<br>* Spalte 4, Zeilen 25-48; Figur 1 *<br>--- | 1-4 | |
| D,A | EP-A-0 298 147 (COPLA)<br>* Zusammenfassung; Figur 1 *<br>--- | 2,5,6 | |
| A | WO-A-8 904 286 (CUSTOM TECHNOLOGIES)<br>* Zusammenfassung; Figur 1 *<br>--- | 2,6 | |
| A | FR-A-2 285 293 (TSUJI et al.)<br>* Seite 3, Zeile 24 - Seite 4, Zeile 29; Figuren 4,5 *<br>--- | 2 | |
| A | GB-A-1 248 991 (FLEXIBLE CONVEYOR)<br>* Seite 2, Zeilen 64-71; Figur 1 *<br>--- | 2 | |
| A | GB-A- 1 145 (FRANKLIN)(A.D.1915)<br>* Seite 3, Zeile 52 - Seite 4, Zeile 6; Figur 1 *<br>----- | 3 | |

**RECHERCHIERTE SACHGEBIETE (Int. Cl.5)**

B 65 G
B 63 B

Der vorliegende Recherchenbericht wurde für alle Patentansprüche erstellt

| Recherchenort | Abschlußdatum der Recherche | Prüfer |
|---|---|---|
| DEN HAAG | 13-03-1990 | NEVILLE D.J. |